# EUROPÄISCHE PATENTSCHRIFT

(11) **EP 0 967 236 B1**
(45) Veröffentlichungstag und Bekanntmachung des Hinweises auf die Patenterteilung: **08.11.2000**
(21) Anmeldenummer: 99108648.9
(22) Anmeldetag: 12.05.1999
(51) Int. Cl.: C08G 77/12

(54) **Verfahren zur Herstellung von Hydrogenmethylpolysiloxanen mit Trimethylsilyl-Endgruppen**
Method for preparation of hydrogenmethylpolysiloxanes having trimethylsilyl endgroups
Méthode pour la préparation des siloxanes à fonction hydrogène et méthyl, ayant des groupes terminaux triméhylsilyle

(30) Priorität: 25.06.1998 DE 19828390
(43) Veröffentlichungstag der Anmeldung: 29.12.1999
(73) Patentinhaber: Wacker-Chemie GmbH, 81737 München (DE)
(72) Erfinder: Lindner, Tassilo, Dr., 84561 Mehring-Öd (DE); Geisberger, Gilbert, Dr., 84503 Altötting (DE); Pachaly, Bernd, Dr., 84561 Mehring-Öd (DE)
(74) Vertreter: Fritz, Helmut, Dr.

(56) Entgegenhaltungen:
- DE-B- 1 125 180
- GB-A- 2 104 906
- US-A- 2 758 124

## Beschreibung

Die Erfindung betrifft ein Verfahren zur Herstellung von Hydrogenmethylpolysiloxanen mit Trimethylsilyl-Endgruppen aus Methyldichlorsilan, Trimethylchlorsilan und Wasser.

Ein derartiges Verfahren ist aus der US-A-2,758,124 bekannt. Dort werden Methyldichlorsilan und Trimethylchlorsilan mit einem großen Überschuß an Wasser umgesetzt. Das Verfahren ist jedoch schwierig zu kontrollieren und führt zu Verzweigungen in der Polysiloxankette bis hin zu Vergelung des Produkts. Entstehendes HCl fällt als Salzsäure an.

DE-A-1 125 180 beschreibt ein Verfahren, bei dem in einem ersten Schritt Methyldichlorsilan und Trimethylchlorsilan mit 1 Mol Wasser je Mol hydrolysierbaren Chlors aus konzentrierter Salzsäure hydrolysiert wird. Die konzentrierte Salzsäure enthält Tetrahydrofuran. In einem zweiten Schritt wird das Rohhydrolysat mit viel Wasser versetzt. Das so hergestellte Öl ist beständig gegen Vergelung. Jedoch fallen in diesem Verfahren große Mengen an Tetrahydrofuran enthaltender konzentrierter Salzsäure sowie verdünnter Salzsäure an, welche nicht wirtschaftlich aufgearbeitet werden können.

Der Erfindung liegt die Aufgabe zugrunde, ein Verfahren zur Herstellung von Hydrogenmethylpolysiloxanen mit Trimethylsilyl-Endgruppen bereitzustellen, bei dem keine Verzweigungen im Hydrogenmethylpolysiloxan entstehen und bei dem ein hoher Anteil des Chlors der Ausgangsstoffe als HCl-Gas anfällt.

Die Erfindung betrifft ein Verfahren zur Herstellung von Hydrogenmethylpolysiloxanen mit Trimethylsilyl-Endgruppen, bei dem in einem ersten Schritt Methyldichlorsilan und Trimethylchlorsilan mit höchstens 0,5 Mol Wasser je Mol hydrolysierbaren Chlors zu einem Teilhydrolysat und gasförmigem Chlorwasserstoff umgesetzt werden und in einem zweiten Schritt das Teilhydrolysat zur Entfernung der noch vorhandenen SiCl-Gruppen mit Wasser unter Bildung von Salzsäure behandelt wird.

Das hydrolysierbare Chlor liegt in Form von SiCl-Gruppen vor. Vorzugsweise werden im ersten Schritt mindestens 0,3 mol Wasser je Mol hydrolysierbaren Chlors eingesetzt.

Das im ersten Schritt gebildete Teilhydrolysat besteht aus Cl- und Trimethylsilyl-endständigen und gegebenenfalls OH-endständigen Hydrogenmethylpolysiloxanen und cyclischen Hydrogenmethylpolysiloxanen.

Der Gehalt an noch vorhandenen SiCl-Gruppen im Teilhydrolysat beträgt vorzugsweise 0,5 bis 5 Gew.-%, insbesondere 1,0 bis 2 Gew.-%.

Das im ersten Schritt anfallende Chlorwasserstoffgas kann direkt in andere Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Im zweiten Schritt wird der Chlorgehalt des Teilhydrolysats mit Wasser vollständig zur Reaktion gebracht. Die dabei entstehende Salzsäure hat vorzugsweise einen HCl-Gehalt von 3 bis 20 Gew.-%, insbesondere 5 bis 10 Gew.-%.

In einer besonderen Ausführungsform wird im zweiten Schritt gebildete Salzsäure im ersten Schritt als Wasserlieferant eingesetzt. Vorzugsweise wird mindestens 90 %, inbesondere mindestens 95 % der im zweiten Schritt gebildeten Salzsäure im ersten Schritt eingesetzt.
Im ersten Schritt wird dann die im zweiten Schritt gebildete Salzsäure vollständig zu gasförmigem Chlorwaserstoff und Teilhydrolysat umgesetzt und dadurch verbraucht.

In einer besonders bevorzugten Ausführungsform wird im zweiten Schritt höchstens so viel Wasser eingesetzt, daß das Wasser der entstehenden Salzsäure im ersten Schritt vollständig umgesetzt wird.

Die Kettenlängen und Viskositäten der hergestellten Hydrogenmethylpolysiloxane werden über das eingesetzte Gewichtsverhältnis an Methyldichlorsilan : Trimethylchlorsilan gesteuert. Vorzugsweise beträgt das Gewichtsverhältnis Methyldichlorsilan : Trimethylchlorsilan 100:1 bis 2:1, insbesondere 50:1 bis 5:1.

Der zweite Schritt des erfindungsgemäßen Verfahrens wird vorzugsweise bei einer Temperatur von 0 bis 100°C, insbesondere 10 bis 60°C durchgeführt.

Das erfindungsgemäße Verfahren kann absatzweise, halbkontinuierlich oder vollkontinuierlich durchgeführt werden, wobei bevorzugt die vollkontinuierliche Fahrweise beider Schritte, beispielsweise in einem Loop-Reaktor, insbesondere in einem Anlagenverbund zum Einsatz kommt.

In einer besonderen Ausführungsform werden die leichtflüchtigen Bestandteile nach dem ersten und/oder dem zweiten Schritt abgetrennt. Die leichtflüchtigen Bestandteile sind hauptsächlich cyclische Hydrogenmethylsiloxane und gegebenenfalls Lösungsmittel. Diese Ausführungsform ist bevorzugt zur Herstellung von schwerflüchtigen Hydrogenmethylpolysiloxanen mit Trimethylsilyl-Endgruppen. Bevorzugt werden die leichtflüchtigen Bestandteile in den ersten und/oder zweiten Schritt rückgeführt, insbesondere in den ersten Schritt.

Vorzugsweise wird beim Abtrennen der leichtflüchtigen Bestandteile die abgetrennte Stoffmenge durch ein organisches Lösungsmittel ersetzt. Bevorzugt als organisches Lösungsmittel ist Toluol.
Das Abtrennen der leichtflüchtigen Bestandteile kann zur Gewinnung von cyclischen Hydrogenmethylpolysiloxanen dienen.

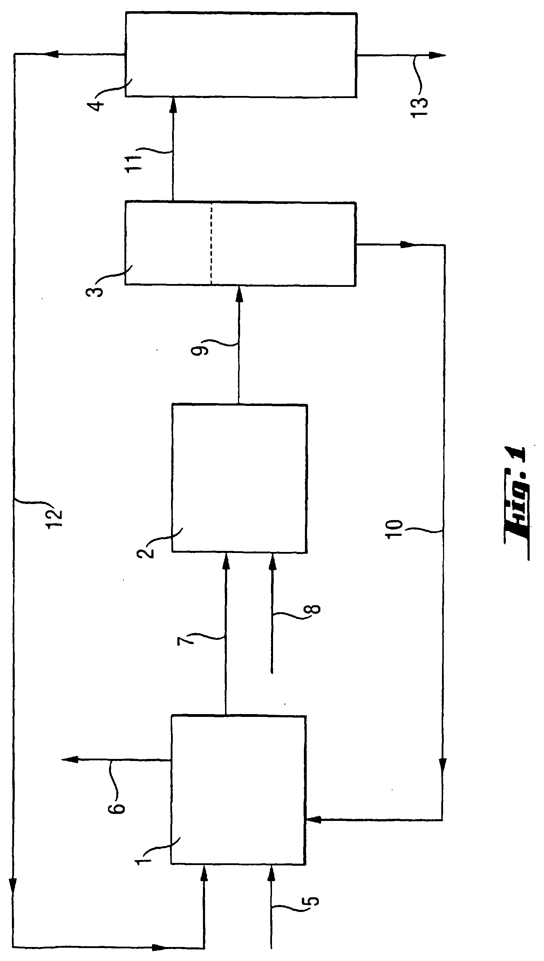

Fig. 1 zeigt eine bevorzugte Ausführungsform des erfindungsgemäßen Verfahrens:

Im ersten Schritt werden in den Loop-Reaktor (1) über Leitung (5) Methyldichlorsilan und Trimethylchlorsilan, über Leitung (10) Salzsäure und über Leitung (12) das Destillat des Dünnschichtverdampfers (4) eingespeist. Abgeführt wird gasförmiger Chlorwasserstoff über Leitung (6) und das hergestellte Teilhydrolysat über Leitung (7).

Das Teilhydrolysat wird über Leitung (7) und Wasser über Leitung (8) in den Loop-Reaktor (2) dosiert.

Das gesamte Reaktionsgemisch wird danach über Leitung (9) in einen Abscheider (3) eingespeist. Dort wird die Salzsäure als untere Phase abgetrennt und über Leitung (10) in den Loop-Reaktor (1) zurückgeführt. Die obere Phase wird über Leitung (11) in den Dünnschichtverdampfer (4) eingespeist. Die leichtflüchtigen Bestandteile werden über Leitung (12) in den Loop-Reaktor (1) zurückgeführt. Der Ablauf (13) enthält die Hydrogenmethylpolysiloxane mit Trimethylsilyl-Endgruppen.

### Beispiele

Die Bezugsziffern beziehen sich auf Fig. 1

### Beispiel 1 (erfindungsgemäß)

In den Loop-Reaktor (1) werden 130kg/h Methyldichlorsilan und 7,0 kg/h Trimethylchlorsilan über Leitung (5), 60 l/h Destillat des Dünnschichtverdampfers (4) (enthält 30 Gew.-% niedrigmolekulare Hydrogenmethylsiloxane und 70 Gew.-% Toluol) über Leitung (12) und Salzsäure aus Abscheider (3) über Leitung (10) bei 30°C eingespeist. Der anfallende Chlorwasserstoff wird gasförmig aus dem Reaktor abgezogen. Das aus dem Loop-Reaktor (1) austretende Teilhydrolysat wird als homogene Phase mit einem Chlor-Gehalt von 15g/kg wird über Leitung (7) in den Loop-Reaktor (2) geführt und dort mit 21,5 kg/h Wasser vermischt.

Das aus dem Loop-Reaktor (2) austretende Reaktionsgemisch wird über Leitung (9) in den Abscheider (3) eingespeist. Dort wird in die obere, organische Hydrolysatphase und die untere wäßrige Phase, die einer ca. 6 Gew.-%igen Salzsäure entspricht, getrennt. Die untere Phase wird über Leitung (10) in den Loop-Reaktor (1) zurückgeführt. Die organische Hydrolysatphase wird im Dünnschichtverdampfer (4) bei 130°C und 10 mbar (absolut) ausgeheizt.Das anfallende Destillat wird vollständig in den Loop-Reaktor (1) eingespeist. Als Ablauf (13) des Dünnschichtverdampfers (4) fallen 73 kg/h Hydrogenmethylpolysiloxan mit Trimethylsilyl-Endgruppen an. Dieses weist einen Chlor-Gehalt von 2 mg/kg und eine Viskosität von 25 mm²/s auf.

### Beispiel 2 (erfindungsgemäß)

Beispiel 1 wird wiederholt mit der Abänderung, daß 12,0 kg/h anstelle von 7,0 kg/h Trimethylchlorsilan in den Loop-Reaktor (1) und 22,4 kg/h anstelle von 21,5 kg/h Wasser in den Loop-Reaktor (2) eingespeist werden. Es werden 76,5 kg/h Hydrogenmethylpolysiloxan mit einem Chlor-Gehalt von 2 mg/kg und einer Viskosität von 15 mm²/s erhalten.

### Beispiel 3 (nicht erfindungsgemäß mit einem Überschuß an Wasser)

Beispiel 1 wird wiederholt mit der Abänderung, daß 40,0 kg/h anstelle von 21,5 kg/h Wasser in den Loop-Reaktor (2) eingespeist werden. Aus Loop-Reaktor (1) tritt ein zweiphasiges Gemisch aus. 6 h später wird an der Phasengrenze Gelbildung beobachtet, nach weiteren 12 h wird der Versuch durch massiven Gelanfall beendet.

## Patentansprüche

1. Verfahren zur Herstellung von Hydrogenmethylpolysiloxanen mit Trimethylsilyl-Endgruppen, bei dem in einem ersten Schritt Methyldichlorsilan und Trimethylchlorsilan mit höchstens 0,5 Mol Wasser je Mol hydrolysierbaren Chlors zu einem Teilhydrolysat und gasförmigem Chlorwasserstoff umgesetzt werden und in einem zweiten Schritt das Teilhydrolysat zur Entfernung der noch vorhandenen SiCl-Gruppen mit Wasser unter Bildung von Salzsäure behandelt wird.

2. Verfahren nach Anspruch 1, bei dem im zweiten Schritt gebildete Salzsäure als Wasserlieferant im ersten Schritt eingesetzt wird.

3. Verfahren nach Anspruch 1 oder 2, bei dem das Gewichtsverhältnis Methyldichlorsilan : Trimethylchlorsilan 100:1 bis 2:1 beträgt.

4. Verfahren nach Anspruch 1 bis 3, bei dem beide Schritte vollkontinuierlich durchgeführt werden.

5. Verfahren nach Anspruch 1 bis 4, bei dem nach dem ersten und/oder zweiten Schritt leichtflüchtige Bestandteile abgetrennt werden und diese leichtflüchtigen Bestandteile in den ersten und/oder zweiten Schritt wiedereingesetzt werden.

## Claims

1. Process for preparing hydromethylpolysiloxanes having trimethylsilyl end groups, in which process in a first step, methyldichlorosilane and trimethylchlorosilane are reacted with at most 0.5 mol of water per mole of hydrolysable chlorine to give a partial hydrolysate and gaseous hydrogen chloride and in a second step, the partial hydrolysate, to remove the SiCl groups still present, is treated with water, forming hydrochloric acid.

2. Process according to Claim 1, in which hydrochloric acid formed in the second step is used as water source in the first step.

3. Process according to Claim 1 or 2, in which the methyldichlorosilane:trimethylchlorosilane weight ratio is from 100:1 to 2:1.

4. Process according to Claim 1 to 3, in which both steps are carried out fully continuously.

5. Process according to Claim 1 to 4, in which high-volatility constituents are separated off downstream of the first and/or second step and these high-volatility constituents are reused in the first and/or second step.

## Revendications

1. Procédé de préparation d'hydrogénométhylpolysiloxanes ayant des groupes triméthylsilyle terminaux, dans lequel, dans une première étape, on fait réagir du méthyldichlorosilane et du triméthylchlorosilane avec au plus 0,5 mole d'eau par mole de chlore hydrolysable pour donner un hydrolysat partiel et du chlorure d'hydrogène gazeux et, dans une deuxième étape, en vue d'éliminer les groupes SiCl encore présents, l'hydrolysat partiel est traité avec de l'eau, en formant de l'acide chlorhydrique.

2. Procédé selon la revendication 1, dans lequel l'acide chlorhydrique formé dans la deuxième étape est utilisé en tant que source d'eau dans la première étape.

3. Procédé selon la revendication 1 ou 2, dans lequel le rapport pondéral méthyldichlorosilane : triméthylchlorosilane est de 100:1 à 2:1.

4. Procédé selon les revendications 1 à 3, dans lequel les deux étapes sont réalisées de manière totalement continue.

5. Procédé selon les revendications 1 à 4, dans lequel les constituants volatils sont séparés en aval de la première et/ou deuxième étape, et ces constituants volatils sont réutilisés dans la première et/ou deuxième étape.
